# EUROPEAN PATENT APPLICATION

(11) **EP 4 564 261 A1**
(43) Date of publication of application: **04.06.2025**
(21) Application number: 24215613.1
(22) Date of filing: 26.11.2024
(51) Int. Cl.: G06Q 10/10, G06Q 30/02, G06Q 50/18

(54) **METHOD AND COMPUTING DEVICE USING MACHINE LEARNING FOR PERFORMING DIGITAL CONTENT APPROVAL**

(30) Priority: 28.11.2023 US 202363603382 P; 21.02.2024 US 202463556072 P; 19.11.2024 US 202418952177
(71) Applicant: Broadsign Serv, Inc., St. Louis, MO 63141 (US)
(72) Inventor: Mongeau, Bryan, Beaconsfield, H9W 2Y1 (CA)
(74) Representative: Zahn, Matthias

(57) **Abstract**

Method and computing device using machine learning for performing content approval (40). The computing device determines metadata (20) related to at least one image (10) and executes a machine learning algorithm (200). The machine learning algorithm (200) uses a model for determining a content approval indicator based on inputs. The content approval indicator (40) indicates whether a content of the at least one image is approved. The inputs comprise the metadata (20) and additional data (30), such as timing data, location data and screen data. For instance, the content is a digital signage content. In an exemplary implementation, the metadata comprise textual metadata and the model is a Natural Language Processing model (e.g. a Large Language Model). The determination of the metadata comprises a processing of the at least one image with another machine learning algorithm (100).

## Description

### Technical Field

The present disclosure relates to the field of digital signage. More specifically, the present disclosure presents a method and computing device using machine learning for performing digital content approval.

### Background

Signage refers to graphic designs, such as symbols, emblems, words, images, etc. In advertising, signage refers to the design or use of images, signs and symbols to communicate a message to a specific group, usually for the purpose of marketing. Digital signage is a sub segment of signage and comprises the use of digital signage display units also referred to as digital signage players. Digital signage players include liquid-crystal displays (LCDs), light-emitting diode (LED) displays, projector screens, etc. A digital signage player displays a succession of digital signage contents, such as still images, videos, etc. Digital signage is a field in great expansion especially for advertising in public venues (e.g. an airport, a shopping mall, etc.), because of the potential to advertise dynamically, such as is done with an advertising video.

After creation of a digital signage content (e.g. a single image or a video) and before the digital signage content is effectively displayed to the public, a content approval procedure is generally enforced. The content approval procedure aims at determining if the digital signage content is compliant with rules and or criteria. For example, the digital signage content is directed to a particular audience (alternatively or complementarily, the digital signage content is not directed to a particular audience). The digital signage content is compliant with specific design attributes (e.g. usage of specific colors and / or non-usage of specific colors). The digital signage content includes reference(s) to a particular subject, field, concept, etc. (alternatively or complementarily, the digital signage content does not include reference(s) to a particular subject, field, concept, etc.).

One or more levels of content approval are generally enforced. A first level of content approval is enforced according to rules and / or criteria defined by a media owner. The media owner is an entity which owns the display infrastructure (e.g. screens) upon which the media content is displayed after approval. Each media owner defines its own rules and / or criteria, which may vary from one media owner to another. A second and complementary level of content approval is enforced according to rules and / or criteria defined by local authority. The local authority is in charge of a location where a display infrastructure of a media owner is deployed (e.g. an airport, a subway network, a city, a particular neighborhood of a city, etc.). As mentioned previously, each local authority defines its own rules and / or criteria, which may vary from one local authority to another local authority. Furthermore, the rules and / or criteria respectively defined by a media owner and a local authority may have a certain level of redundancy, while respectively also having specificities.

The determination of the compliance of the content of a given digital signage content with a predefined set of rules and / or criteria is generally performed by human being(s). A person in charge of the compliance procedure visually inspects the digital signage content and determines the compliance based on the visual inspection. This procedure being performed by a human being has several drawbacks. For example, the procedure is time consuming and includes delays, in particular when the compliance procedure involves several levels of decision. For instance, a first person is in charge of implementing a content approval procedure for a content owner, and one or more other persons are in charge of implementing content approval procedure(s) for one or more local authority. In another example, the procedure being performed by a human being makes it subject to errors due to lack of concentration, tiredness, lack of skills, etc.

Therefore, there is a need for a new a method and computing device using machine learning for performing digital content approval.

### Summary

According to a first aspect, the present disclosure provides a computer-implemented method using machine learning for performing digital content approval. The method comprises the step of storing in a memory of a computing device a model of a machine learning algorithm. The method comprises the step of determining metadata related to at least one image. The method comprises the step of executing, by a processing unit of the computing device, the machine learning algorithm. The machine learning algorithm uses the model for determining a content approval indicator based on inputs. The content approval indicator indicates whether the content of the at least one image is approved. The inputs comprise the metadata and at least one of the following: data related to a time of display of the at least one image, data related to a location of display of the at least one image, and data related to a screen used for displaying the at least one image.

In a particular aspect, the at least one image comprises a digital signage content.

In another particular aspect, the at least one image is part of a video.

In still another particular aspect, the metadata comprise textual metadata. In a particular embodiment, the textual metadata comprise at least one of the following: a word or a group of words represented in the at least one image, a logo represented in the at least one image, a color used in the at least one image, and a type of content represented in the at least one image. In another particular embodiment, the model is a Natural Language Processing (NLP) model and the machine learning algorithm is a NLP algorithm. For instance, the model is a Large Language Model (LLM) and the machine learning algorithm is a LLM algorithm.

In yet another particular aspect, the content approval indicator is one of the following: a Boolean taking the value True if the content is approved and the value False if the content is not approved, a percentage expressing a level of confidence in the determination of whether the content shall be approved, and a value selected among a set of predetermined values.

In another particular aspect, the determination of the metadata comprises a processing of the at least one image with another machine learning algorithm. In a particular embodiment, the other machine learning algorithm implements a neural network.

In still another particular aspect, the method further comprises the step of executing, by the processing unit of the computing device, the machine learning algorithm with another model. The machine learning algorithm uses the other model for determining a content category based on inputs. The content category identifies a category of the content of the at least one image. The inputs comprise at least some of the metadata.

According to a second aspect, the present disclosure provides a computing device comprising a processing unit adapted to perform the aforementioned method.

According to a third aspect, the present disclosure provides a non-transitory computer-readable medium comprising instructions which, when executed by a processing unit of a computing device, cause the computing device to carry out the aforementioned method. In other words, a computer program product that - when loaded into a memory of a computer and being executed by at least one processor of the computer - causes the computer to perform the steps of the computer-implemented method.

### Brief Description of the Drawings

Embodiments of the disclosure will be described by way of example only with reference to the accompanying drawings, in which:
FIG. 1 is a schematic representation of a procedure for performing digital content approval using machine learning;
FIG. 2 is a schematic representation of a computing device adapted for implementing the procedure illustrated in FIG. 1;
FIGS. 3 and 4 represent a method using machine learning for performing digital content approval;
FIG. 5 is a schematic representation of a procedure for performing digital content categorization using machine learning; and
FIG. 6 represents a method using machine learning for performing digital content categorization.

### Detailed Description

The foregoing and other features will become more apparent upon reading of the following non-restrictive description of illustrative embodiments thereof, given by way of example only with reference to the accompanying drawings.

Various aspects of the present disclosure generally address one or more of the problems related to the implementation of a procedure for performing digital content approval. More specifically, a first machine learning algorithm is used for determining metadata related to the digital content. Then, a second machine learning algorithm is used for determining a content approval indicator of the digital content based on the metadata. The present disclosure focuses on digital signage content in the form of a single image or a plurality of images (e.g. extracted from a video). Furthermore, the present disclosure focuses on the generation of textual metadata (directly or indirectly) by the first machine learning algorithm and processing of the textual metadata by the second machine learning algorithm. A person skilled in the art will readily understand that the teachings of the present disclosure can be extended to digital content approval beyond the scope of digital signage content. Optionally, the second machine learning algorithm is used with another model, to determine a content category of the digital content based on at least some of the metadata.

### DIGITAL CONTENT APPROVAL

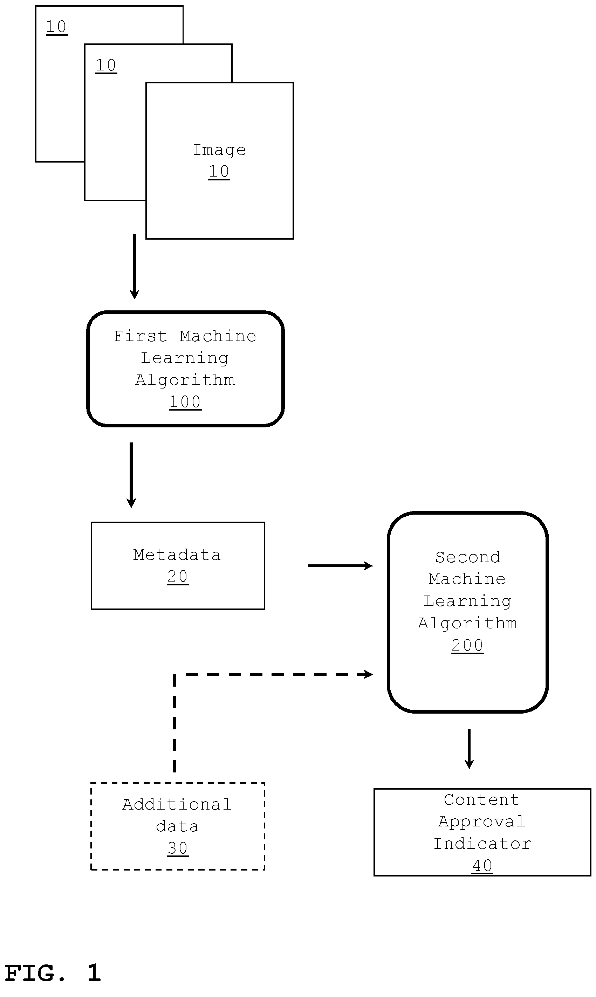

Referring now to FIG. 1, a procedure for performing digital content approval is represented. The procedure uses a first machine learning algorithm 100 and a second machine learning algorithm 200.

One or more images 10 are processed by the first machine learning algorithm 100 to generate metadata 20 related to a content of the one or more images 10. In a first implementation, the first machine learning algorithm 100 is configured to operate with a single image 10 as input. In a second implementation, the first machine learning algorithm 100 is adapted to operate with a plurality of images 10 as input.

As mentioned previously, in an exemplary use case, the one or more images comprise a digital signage content. For instance, the digital signage content is an advertising video. The one or more images 10 are extracted from the advertising video. Since the video may contain a number of images beyond the processing power of the first machine learning algorithm 100, the one or more images 10 define a representative sample of all the images contained in the video. Alternatively (if the processing power of the first machine learning algorithm 100 is sufficient), the images 10 comprise all the images contained in the video.

The metadata 20 are processed by the second machine learning algorithm 200 to determine a content approval indicator 40 of the one or more images 10. The content approval indicator 40 indicates whether a content of the image(s) 10 is approved. For example, the content approval indicator 40 is a Boolean taking the value True if the content is approved and the value False if the content is not approved. In another example, the content approval indicator 40 is a percentage, expressing a level of confidence in the determination of whether the content shall be approved or not (e.g. 95% of chances that the content should be approved). In still another example, the content approval indicator 40 takes a value among a set of predetermined values. Examples of predetermined values include a first value for approved (green indicator), a second value for not approved (red indicator), and a third value for a warning that the content should probably not be approved but a further investigation by a human being is needed (orange indicator).

In the context of digital signage, the content approval indicator 40 indicates whether a digital signage content associated to the one or more images 10 should be approved or not by a media owner. For instance, the digital signage content is an advertising video from which the one or more images 10 are extracted. The media owner is an entity which owns a display infrastructure upon which the digital signage content is displayed after approval. As mentioned previously, the procedure illustrated in FIG. 1 replaces a person in charge of taking a decision to approve or not the digital signage content based on rules and / or criteria defined by the media owner.

Optionally, additional data 30 are used as inputs of the second machine learning algorithm 200. The additional data 30 provide additional context with respect to the image(s) 10. This additional context cannot be directly extracted from the image(s) 10 by the first machine learning algorithm 100. For example, in the context of digital signage, the content approval indicator 40 indicates whether a digital signage content associated to the one or more images 10 should be approved or not, not only by the media owner, but also by a local authority. The local authority is in charge of a location where the display infrastructure of the media owner is deployed, for displaying the digital signage content corresponding to the image(s) 10. The additional data 30 provide additional context with respect to the location under the responsibility of the local authority. Alternatively or complementarily, the additional data 30 provide additional context with respect to the media owner, but are not generated by the first machine learning algorithm 100.

Based on the previous examples, the content approval indicator 40 indicates whether the digital content corresponding to the image(s) 10 should be approved in accordance with rules and / or criteria defined by one or more entities (e.g. according to rules and / or criteria defined by a media owner only, according to rules and / or criteria respectively defined by a media owner and a local authority, etc.).

Although not represented in FIG. 1 for simplification purposes, optional additional data may also be used as inputs of the first machine learning algorithm 100, to provide additional context with respect to the image(s) 10.

An exemplary implementation of the first machine learning algorithm 100 is a neural network adapted to extract features from the image(s) 10. The inputs of the neural network include the image(s) 10. The predictive model of the neural network is generated during a training phase, to acquire the capability to identify predefined features which may be present in the image(s) 10. For illustration purposes only, a classical exemplary extracted feature is a type of animal present in the input image(s) 10 (e.g. a cat, a dog or a horse). The neural networks used in this context generally use convolutions and are referred to as convolutional neural networks. The field of image recognition / image feature extraction using (convolutional) neural networks has reached a sufficient level of maturity, to be used in various fields and industries. The architecture of the (convolutional) neural networks used in this context are well known in the art. Although some tuning of the architecture of the (convolutional) neural networks may be needed for each specific use case, the main effort lies in the generation of a predictive model adapted to the specific use case (generally using a large number of training samples for generating the predictive model).

The format of one or more outputs of the first machine learning algorithm 100 may be different from the format of the corresponding metadata 20 used as inputs of the second machine learning algorithm 200. In this case, the one or more outputs of the first machine learning algorithm 100 are converted into the corresponding metadata 20. Alternatively, one or more outputs of the first machine learning algorithm 100 can be used directly as the metadata 20 inputted to the second machine learning algorithm 200.

Optionally, several instances of the first machine learning algorithm 100 are used, each instance having its own dedicated predictive model. Each dedicated predictive model is adapted for generating a subset of the metadata 20. This is the case when a single predictive model is not adapted for generating all types of metadata 20. This may also be the case because from an implementation perspective, it is more effective to train a few specialized predictive models (each predictive model adapted for interfering a subset of the metadata), rather than a single more complex predictive model (adapted for generating all the metadata 20).

In an exemplary implementation, the metadata 20 are in a textual format and the second machine learning algorithm 200 is capable of processing inputs in the textual format. For instance, the second machine learning algorithm 200 implements a Natural Language Processing (NLP) algorithm. Recently, a particular type of NLP algorithms has been gaining traction: Large Language Model (LLM) algorithms. Thus, the second machine learning algorithm 200 may be implemented by a LLM algorithm.

The underlying technology used for NLP and LLM algorithms generally includes neural networks specifically designed to process textual data as inputs. Examples of NLP and LLM algorithms are well known in the art and can be considered as black boxes, using a language model adapted to process the textual inputs to generate textual outputs.

Generic language models have been developed for NLP and LLM, to allow conversational interactions with NLP and LLM based applications. However, these generic language models are not adapted to the present disclosure. Thus, a dedicated language model needs to be generated through training. The training process uses training examples to determine the adequate value for the content approval indicator 40 (e.g., approved or not approved) when presented with the textual metadata 20 as inputs. The content approval indicator 40 is also in a textual format. Examples of textual content approval indicators 40 include "content approved", "content not approved", "content needs to be further verified", "content approved with a confidence level of 98%", etc. In a case where the textual content approval indicator 40 indicates that the content is "not approved" or "needs to be further verified" (e.g. by a human being), a reason expressed in textual format can also be provided to explain why the content has not been approved by the algorithm.

An exemplary learning procedure which can be used for any type of machine learning algorithm used for the second machine learning algorithm 200 is as follows. During a transitory phase (before using the second machine learning algorithm 200), a human being is still in charge of performing the digital content approval based on the predefined rules and / or criteria. Each time the human being analyses image(s) 10 and determines a content approval indicator 40 based on the rules and / or criteria, the metadata 20 are extracted by the first machine learning algorithm 100 from the image(s) 10. The extracted metadata 20 and the content approval indicator 40 determined by the human being are used for the training procedure, to generate the model of the second machine learning algorithm 200.

In the case where additional data 30 are used as inputs of the second machine learning algorithm 200, these additional data 30 are also in a textual format. Furthermore, as mentioned previously, if the outputs of the first machine learning algorithm 100 are not in textual format, they are converted into the textual metadata 20.

Examples of metadata 20 include a word or a group of words (e.g. sentences) represented in the images 10, a logo represented in the images 10, a color used in the images 10, a type of content (e.g. a type of advertisement) represented in the images 10, a type of person represented in the images 10, a type of animal represented in the images 10, a type of object represented in the images 10, etc. Metadata in the form of a word or group of words represented in the images 10 provides the capability to perform profanity checks of the content of the images 10.

Examples of additional data 30 include data related to a time of display of the images 10, data related to a location of display of the images 10, data related to a screen used for displaying the images 10 (e.g. screen physical properties), etc.

The rules or criteria for approving digital content may vary from one media owner to another (the entity which owns and / or manages the display infrastructure for displaying the digital content). In this case, a dedicated model of the second machine learning algorithm 200 is generated via a training process for each media owner (to take into account the specificities of each media owner). Alternatively, the same model of the second machine learning algorithm 200 is used for all the media owners (or at least a plurality of media owners). In this case, the inputs of the second machine learning algorithm 200 include an additional parameter for identifying the media owner to which the determined content approval indicator 40 applies.

The functionality of machine learning based content approval may be deployed in two steps, to gain trust from media owners who may be initially reluctant to rely on artificial intelligence. In a first step, a notification is sent to the media owner providing the determined content approval indicator 40 in the form of a suggestion. The media owner is invited to confirm that he agrees with the suggestion. In a second step, a notification is sent to the media owner indicating that the determined content approval indicator 40 has been automatically enforced. The media owner is invited to respond only if he disagrees with the content approval decision or if he wants to manually review the content to make a decision.

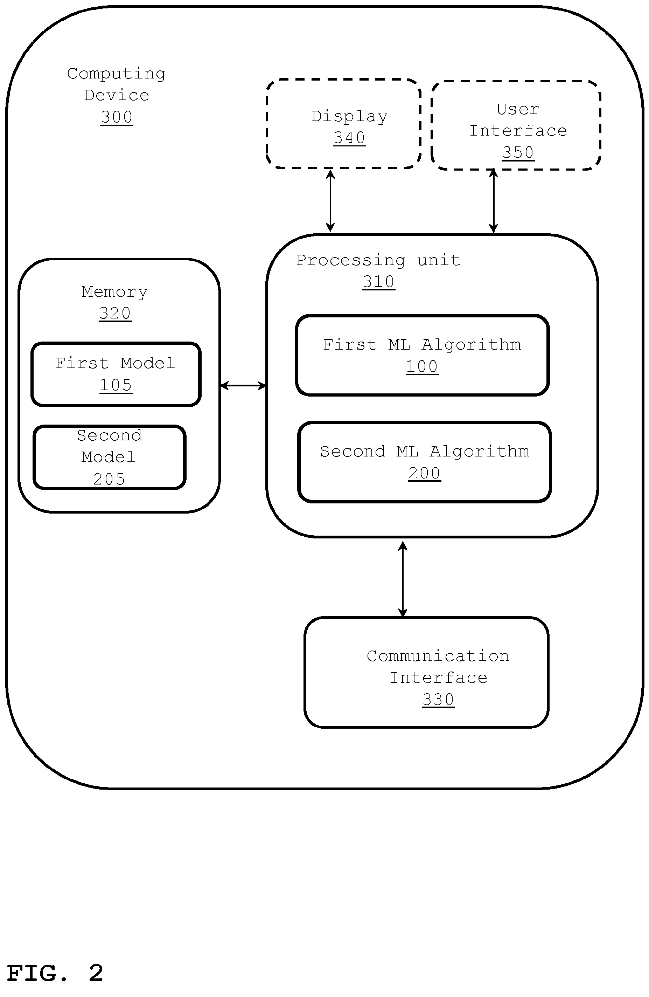

Referring now concurrently to FIGS. 1 and 2, a computing device 300 is illustrated. The computing device 300 is adapted for executing the first (100) and second (200) machine learning algorithms illustrated in FIG. 1.

The computing device 300 comprises a processing unit 310. The processing unit 310 comprises one or more processor (not represented in FIG. 2 for simplification purposes) capable of executing instructions of computer program(s) for implementing functionalities of the computing device 300 (e.g. receiving data, processing the received data, generating data, transmitting the generated data, etc.). Each processor may further have one or more core. For example, the processing unit 310 executes instructions of computer programs implementing the first machine learning algorithm 100 and the second machine learning algorithm 200.

The computing device 300 comprises memory 320. The memory 320 stores instructions of the computer program(s) executed by the processing unit 310, data generated by the execution of the computer program(s), data received via a communication interface 330, etc. The computing device 300 may comprise several types of memories, including volatile memory (e.g. volatile Random Access Memory (RAM), etc.) and non-volatile memory (e.g. a hard drive, electrically-erasable programmable read-only memory (EEPROM), flash, etc.). For example, the memory 320 stores respective first model 105 used by the first machine learning algorithm 100 and second model 205 used by the second machine learning algorithm 200.

The computing device 300 comprises the communication interface 330. The communication interface 330 allows the computing device 300 to exchange data with other computing devices. The communication interface 330 supports one of the following communication technologies: fixed broadband, Ethernet, cellular (e.g. a 4G or 5G cellular network), Wi-Fi, wireless mesh, Bluetooth^{®}, Bluetooth^{®} Low Energy (BLE), etc. Although a single communication interface 330 is represented in FIG. 2, the computing device 300 may include several communication interfaces 330, each communication interface 330 supporting a given communication technology for exchanging data with computing devices also supporting the given communication technology.

Optionally, the computing device 300 also comprises a display 340 (e.g. a standard screen, a touchscreen, etc.) and / or a user interface 350 (e.g. a keyboard, a mouse, a touchscreen, a touchpad, etc.).

Following is an implementation of the procedure illustrated in FIG. 1 by the computing device 300. The images 10 are received via the communication interface 330. The processing unit 310 executes the first machine learning algorithm 100 to generate the metadata 20 based on the processing of the images 10. Optionally, the additional data 30 are received via the communication interface 330. The processing unit 310 executes the second machine learning algorithm 200 to determine the content approval indicator 40 based on the processing of the metadata 20 (and optionally the additional data 30). The content approval indicator 40 may be stored in the memory 320, displayed on the display 340, transmitted to a remote computing device (not represented in FIG. 2) via the communication interface 330, etc.

Following is an alternative implementation (not represented in the figures for simplification purposes) of the procedure illustrated in FIG. 1 by the computing device 300. The reception of the images 10 and processing of the images 10 by the first machine learning algorithm 100 to generate the metadata 20 is performed by another computing device (not represented in the figures for simplification purposes, but similar to the computing device 300). The metadata are transmitted by the other computing device to the computing device 300. The metadata 20 are received via the communication interface 330. The processing unit 310 executes the second machine learning algorithm 200 to determine the content approval indicator 40 based on the processing of the metadata 20 (and optionally the additional data 30). In this implementation, the processing unit 310 does not execute the first machine learning algorithm 100.

A person skilled in the art will readily understand that other implementations of the procedure illustrated in FIG. 1 by the computing device 300 are within the scope of the present disclosure. For example, some of the metadata 20 are generated by another computing device and transmitted to the computing device 300; while some of the metadata 20 are generated by computing device 300 through the first machine learning algorithm 100.

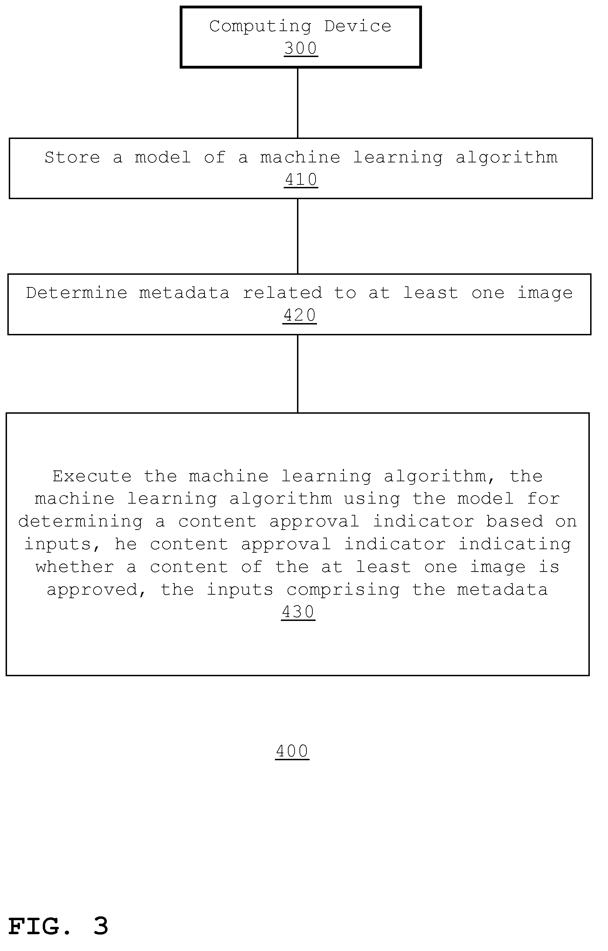

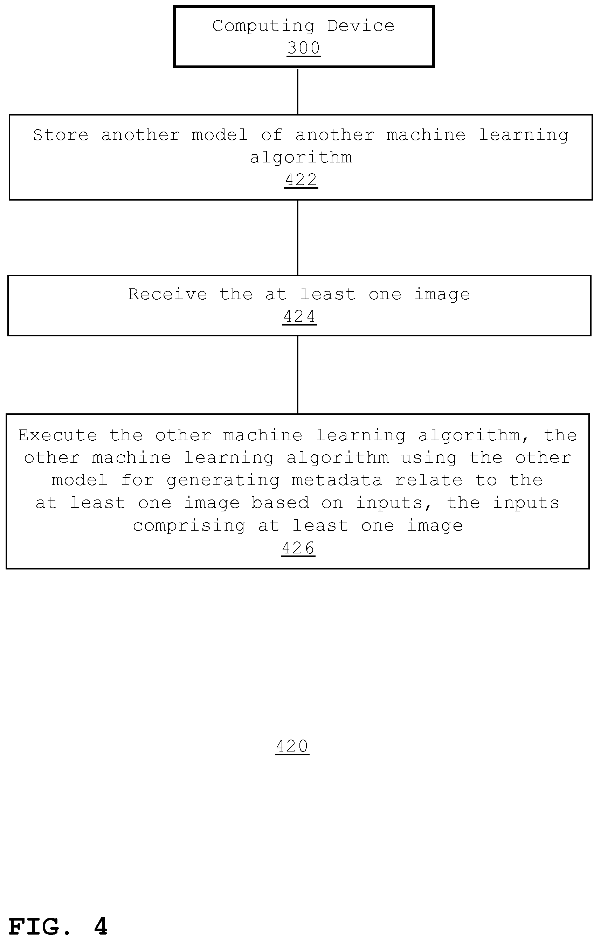

Referring now concurrently to FIGS. 1, 2, 3 and 4, a method 400 using machine learning for performing digital content approval is represented in FIGS. 3 and 4. The method 400 is implemented by computing device 300.

A dedicated computer program has instructions for implementing the steps of the method 400. The instructions are stored in a non-transitory computer-readable medium (e.g. the memory 320 of the computing device 300). The instructions provide for using machine learning to perform digital content approval, when executed by the processing unit 310 of the computing device 300. The instructions are deliverable via an electronically-readable media, such as a storage media (e.g. a USB key), or via communication links (e.g. a Wi-Fi or cellular network) through the communication interface 330 of the computing device 300.

The method 400 comprises the step 410 of storing in the memory 320 a model of a machine learning algorithm. The machine learning algorithm of step 410 corresponds to the second machine learning algorithm 200 illustrated in FIGS. 1 and 2, and the model corresponds to the second model 205 illustrated in FIG. 2. Step 410 is executed by the processing unit 310.

The method 400 comprises the step 420 of determining metadata 20 related to a content of at least one image 10. Step 420 is executed by the processing unit 310. The implementation of this step will be detailed later in relation to FIG. 4.

The method 400 comprises the step 430 of executing the machine learning algorithm 200. The machine learning algorithm 200 uses the model 205 stored at step 410 for determining a content approval indicator 40 based on inputs. The content approval indicator 40 indicates whether a content of the at least one image 10 is approved. The inputs comprise the metadata 20 determined at step 420. Step 430 is executed by the processing unit 310.

FIG. 4 illustrates an implementation of step 420 by the computing device 300, which was mentioned previously in relation to FIG. 2.

Step 420 comprises the sub-step 422 of storing in the memory 320 another model of another machine learning algorithm. The other machine learning algorithm of sub-step 422 corresponds to the first machine learning algorithm 100 illustrated in FIG. s 1 and 2, and the other model corresponds to the first model 105 illustrated in FIG. 2. Step 422 is executed by the processing unit 310.

Step 420 comprises the sub-step 424 of receiving the at least one image 10 (mentioned in step 420 illustrated in FIG. 3) via the communication interface 330. Step 424 is executed by the processing unit 310.

Step 420 comprises the sub-step 426 of executing the other machine learning algorithm 100. The other machine learning algorithm 100 uses the other model 105 stored at sub-step 426 for generating the metadata 20 related to the at least one image 10 based on inputs, the inputs comprising the at least one image 10. Sub-step 426 is executed by the processing unit 310.

Following is an alternative implementation of step 420 by the computing device 300, which was mentioned previously in relation to FIG. 2. Step 420 simply consists in receiving the metadata 20 from another computing device (not represented in the figures) via the communication interface 330. The other computing device is similar to the computing device 300. The other computing device implements substeps 422, 424 and 426. Then, the other computing device transmits the metadata 20 to the computing device 300.

### DIGITAL CONTENT CATEGORIZATION

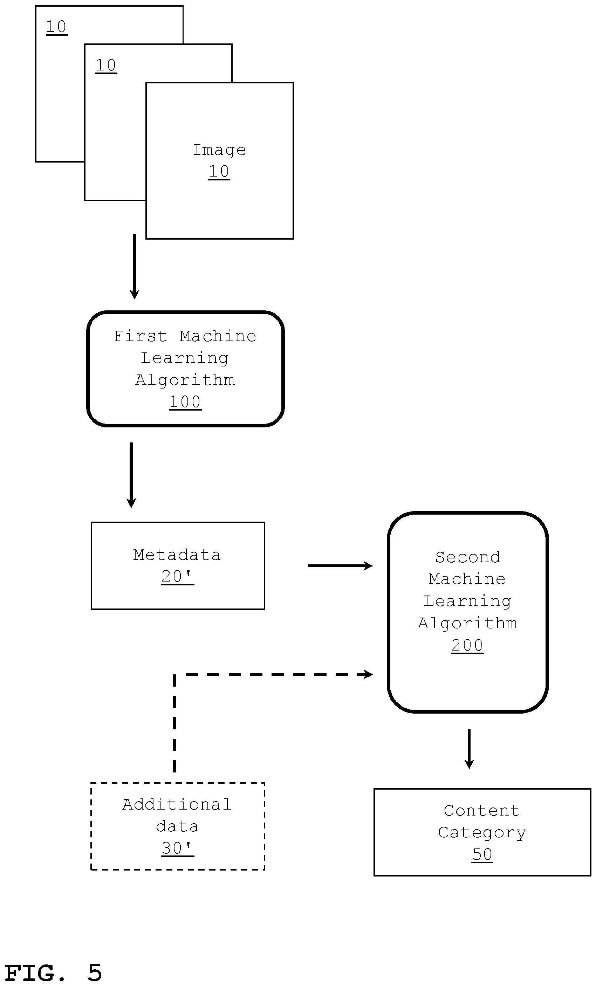

Referring now to FIG. 5, a procedure for performing digital content categorization is represented. The procedure is similar to the one illustrated in FIG. 1 for performing digital content approval, using the first machine learning algorithm 100 and the second machine learning algorithm 200.

As described previously in relation to FIG. 1, the first machine learning algorithm 100 is configured to operate with one or more images 10 as input. The processing of the one or more images 10 by the first machine learning algorithm 100 generates metadata 20' related to the content of the one or more images 10. In an exemplary use case, the one or more images 10 comprise a digital signage content. For instance, the digital signage content is an advertising video from which the one or more images 10 are extracted.

The metadata 20' are processed by the second machine learning algorithm 200 to determine a content category 50 of the one or more images 10. The content category 50 identifies a category of the content of the image(s) 10. The second machine learning algorithm 200 is trained to recognize a predefined list of content categories. In the context of digital signage, examples of categories include automotive, travel, healthcare, entertainment, consumer electronics, etc. The procedure illustrated in FIG. 5 replaces a person in charge of determining the content category 50 by visually inspecting the image(s) 10.

A media owner operates with its own list of content categories (also referred to as taxonomies), which are generally (at least partially) different from content categories used by other media owners. Thus, when processing the metadata 20' generated based on the image(s) 10 of a given media owner, the second machine learning algorithm 200 uses a model which has been specifically trained to identify categories (taxonomies) defined by the given media owner. Alternatively, the second machine learning algorithm 200 uses a generic model which has been trained with generic categories (taxonomies) applicable to a plurality of media owners.

Optionally, the content category 50 is defined by a hierarchical structure with several levels of categorization. For example, the content category 50 comprises a main category (e.g. automotive), a sub-category (e.g. luxury cars, family cars, trucks, etc.), optionally a sub-sub-category, etc.

Optionally, additional data 30' are used as inputs of the second machine learning algorithm 200. The additional data 30' provide additional context with respect to the image(s) 10. This additional context cannot be directly extracted from the image(s) 10 by the first machine learning algorithm 100.

Although not represented in FIG. 5 for simplification purposes, optional additional data may also be used as inputs of the first machine learning algorithm 100, to provide additional context with respect to the image(s) 10.

As mentioned previously in relation to FIG. 1, an exemplary implementation of the first machine learning algorithm 100 is a neural network adapted to extract features from the image(s) 10. The characteristics and functionalities of the neural network described previously in relation to FIG. 1 are applicable in the context of the extraction of the metadata 20' used for determining the content category 50.

As mentioned previously in relation to FIG. 1, the format of one or more outputs of the first machine learning algorithm 100 may be different from the format of the corresponding metadata 20' used as inputs of the second machine learning algorithm 200. In this case, the one or more outputs of the first machine learning algorithm 100 are converted into the corresponding metadata 20'. Alternatively, one or more outputs of the first machine learning algorithm 100 can be used directly as the metadata 20' inputted to the second machine learning algorithm 200.

In an exemplary implementation described previously in relation to FIG. 1, the metadata 20' are in a textual format and the second machine learning algorithm 200 is capable of processing inputs in the textual format. For instance, the second machine learning algorithm 200 implements a Natural Language Processing (NLP) algorithm. Recently, a particular type of NLP algorithms has been gaining traction: Large Language Model (LLM) algorithms. Thus, the second machine learning algorithm 200 may be implemented by a LLM algorithm.

A dedicated language model used by the LLM algorithm 200 is generated through training. The training process uses training examples to determine the adequate value for the content category 50 when presented with the textual metadata 20' as inputs. The content category 50 is in a textual format. Examples of textual content categories 50 include "automotive", "travel", "healthcare", "entertainment", "consumer electronics", etc.

An exemplary learning procedure which can be used for any type of machine learning algorithm used for the second machine learning algorithm 200 is as follows. During a transitory phase (before using the second machine learning algorithm 200), a human being is still in charge of performing the digital content categorization based on a predefined list of categories. Each time the human being analyses image(s) 10 and determines a content category 50 based on the predefined list of categories, the metadata 20' are extracted by the first machine learning algorithm 100 from the image(s) 10. The extracted metadata 20' and the content category 50 determined by the human being are used for the training procedure, to generate the model of the second machine learning algorithm 200.

In the case where additional data 30' are used as inputs of the second machine learning algorithm 200, these additional data 30' are also in a textual format. Furthermore, as mentioned previously, if the outputs of the first machine learning algorithm 100 are not in textual format, they are converted into the textual metadata 20'.

Examples of metadata 20' include a word or a group of words (e.g. sentences) represented in the images 10, a logo represented in the images 10, a color used in the images 10, a type of content (e.g. a type of advertisement) represented in the images 10, a type of person represented in the images 10, a type of animal represented in the images 10, a type of object represented in the images 10, etc.

As mentioned previously with respect to the content approval procedure, the functionality of machine learning based content categorization may be deployed in two steps. In a first step, a notification is sent to the media owner providing the determined content category 50 in the form of a suggestion. The media owner is invited to confirm that he agrees with the suggestion. In a second step, a notification is sent to the media owner indicating that the determined content category 50 has been automatically selected. The media owner is invited to respond only if he disagrees with the content category selection or if he wants to manually review the content to select a category.

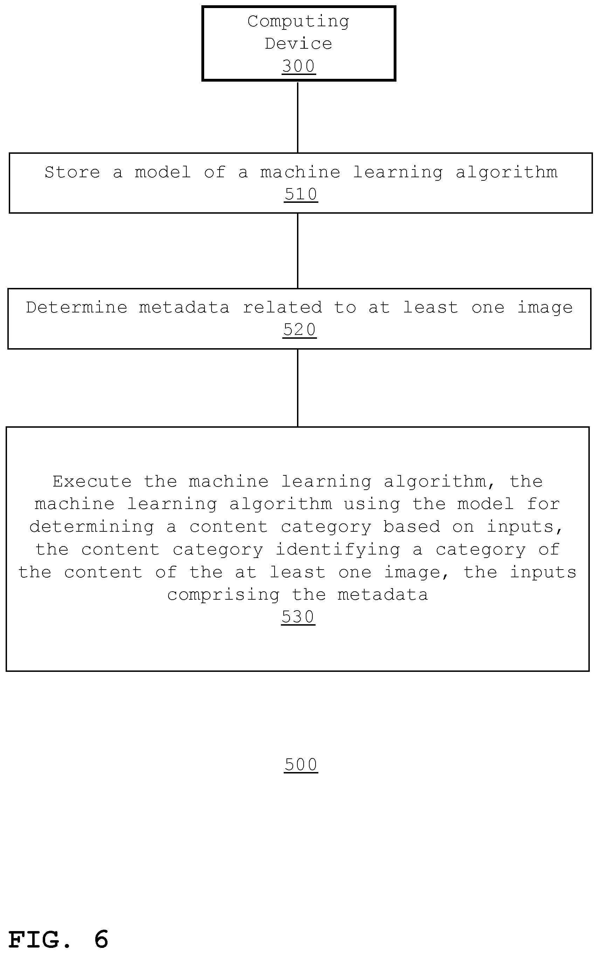

Referring now concurrently to FIGS. 2, 5 and 6, a method 500 using machine learning for performing digital content categorization is represented in FIG. 6. The method 500 is implemented by computing device 300.

A dedicated computer program has instructions for implementing the steps of the method 500. The instructions are stored in a non-transitory computer-readable medium (e.g. the memory 320 of the computing device 300). The instructions provide for using machine learning to perform digital content categorization, when executed by the processing unit 310 of the computing device 300. The instructions are deliverable via an electronically-readable media, such as a storage media (e.g. a USB key), or via communication links (e.g. a Wi-Fi or cellular network) through the communication interface 330 of the computing device 300.

The method 500 comprises the step 510 of storing in the memory 320 a model of a machine learning algorithm. The machine learning algorithm of step 510 corresponds to the second machine learning algorithm 200 illustrated in FIGS. 2 and 5. Step 510 is executed by the processing unit 310.

The method 500 comprises the step 520 of determining metadata 20' related to a content of at least one image 10. Step 520 is executed by the processing unit 310. An exemplary implementation of step 520 is similar to the previously described implementation of step 420 illustrated in FIG. 4.

The method 500 comprises the step 530 of executing the machine learning algorithm 200. The machine learning algorithm 200 uses the model stored at step 510 for determining a content category 50 based on inputs. The content category 50 identifies a category of the content of the at least one image 10. The inputs comprise the metadata 20' determined at step 520. Step 530 is executed by the processing unit 310.

Reference is now made concurrently to FIGS. 1 and 5. The procedures for performing content approval and content categorization have been described so far as being independent from one another. However, there are some cases where the two procedures can be combined, as described in the following.

In a first implementation, the metadata 20 used for content approval are independent from the metadata 20' used for content categorization. In this case, the two procedures are performed independently from one another.

In a second implementation, there is at least a partial redundancy between the metadata 20 used for content approval and the metadata 20' used for content categorization.

The metadata 20 are determined as described previously in relation to FIG. 1. The metadata 20 are then used by the second machine learning algorithm 200 to determine the content approval indicator 40. At least a subset of the metadata 20 is used for the metadata 20'. The rest of the metadata 20' is determined as described previously in relation to FIG. 5. The metadata 20' are then used by the second machine learning algorithm 200 to determine the content category 50.

Alternatively, the metadata 20' are determined as described previously in relation to FIG. 5. The metadata 20' are then used by the second machine learning algorithm 200 to determine the content category 50. At least a subset of the metadata 20' is used for the metadata 20. The rest of the metadata 20 is determined as described previously in relation to FIG. 1. The metadata 20 are then used by the second machine learning algorithm 200 to determine the content approval indicator 40.

In a particular embodiment, the metadata 20 and 20' are identical and need to be determined only once.

The same implementation of the second machine learning algorithm 200 is used for determining the content approval indicator 40 and the content category 50. A first dedicated model is used by the second machine learning algorithm 200 to determine the content approval indicator 40, using the metadata 20 as inputs. A second dedicated model is used by the second machine learning algorithm 200 to determine the content category 50, using the metadata 20' as inputs.

In a particular embodiment, a single model is used by the second machine learning algorithm 200 to simultaneously determine the content approval indicator 40 and the content category 50, using the metadata 20 and the metadata 20' as inputs. If there are some redundancies between the metadata 20 and the metadata 20', the inputs of the second machine learning algorithm 200 may be adapted to eliminate these redundancies.

Alternatively, two different implementations of the second machine learning algorithm 200 are used for respectively determining the content approval indicator 40 (e.g. using a first type of NLP algorithm) and the content category 50 (e.g. using a second type of NLP algorithm). As mentioned previously, each implementation uses its own dedicated model.

Similar considerations are applicable to the determination of the metadata 20 and 20' by the first machine learning algorithm 100.

In a first implementation, the image(s) 10 used for content approval (for determining the metadata 20) are independent from the image(s) 10 used for content categorization (for determining the metadata 20').

In a second implementation, there is at least a partial redundancy between the images(s) 10 used for content approval and the image(s) 10 used for content categorization.

The same implementation of the first machine learning algorithm 100 is used for determining the metadata 20 and the metadata 20'. A first dedicated model is used by the first machine learning algorithm 100 to determine the metadata 20, using image(s) 10 as inputs. A second dedicated model is used by the first machine learning algorithm 100 to determine the metadata 20', using image(s) 10 as inputs.

In a particular embodiment, a single model is used by the first machine learning algorithm 100 to simultaneously determine the metadata 20 and the metadata 20', using image(s) 10 as inputs.

Alternatively, two different implementations of the first machine learning algorithm 100 are used for respectively determining the metadata 20 (e.g. a first implementation of a neural network) and the metadata 20' (e.g. a second implementation of a neural network). As mentioned previously, each implementation uses its own dedicated model.

As mentioned previously, the present disclosure is not limited to the field of digital signage content and can be extended to any type of digital content. In particular, it can be extended to the field of digital broadcasting / digital streaming, where content is broadcasted / streamed to a user device (e.g. television, computer, tablet, smartphone, etc.). In this context, loops of advertisements are inserted into other types of content, in a manner similar to the loops of digital signage advertising displayed on digital signage players.

### DISCUSSION

Referring now to FIG. 1, the usage of the second machine learning algorithm 200 capable of processing inputs (the metadata 20 and optionally the additional data 30) to determine the value of the content approval indicator, is efficient in terms of processing power and memory consumption. A significant amount of processing power and memory is needed during the training phase, where the model of the second machine learning algorithm 200 is generated. However, when the training phase is completed and during the operational phase, the processing of the inputs (20 and optionally 30) to generate the content approval indicator 40 is efficient in terms processing power and memory consumption as is well known in the art of machine learning.

The generation of the metadata 20 by the first machine learning algorithm 200 is also efficient in terms processing power and memory consumption (during the operational phase), for the same reasons provided in respect to the second machine learning algorithm 200.

More specifically, the combination of the first (100) and second (200) machine learning algorithms is more efficient in terms of processing power and memory consumption than alternative technical solutions. For example, an alternative solution consists in comparing the content of the image(s) 10 to a database of reference images, to determine if the image(s) contain one of the reference images. Any occurrence of one of the reference images results in the content approval indicator 40 being set to unapproved. However, in order to have the content approval indicator 40 being set to approved, the entire collection of reference images need to be compared to the image(s) 10.

Furthermore, machine learning algorithms relying on inputs in textual format (e.g. NLP and LLM) are now a strong focus in the artificial intelligence industry. These technologies benefit from constant improvements and performance optimizations, in order to make them deployable in multiple environments and contexts. Therefore, using this type of machine learning technology for the second machine learning algorithm 200 is particularly effective: existing technology (e.g. NLP and LLM) can be easily adapted and customized to the context of the present invention, rather than developing brand new algorithmic tools or using other algorithm tools that require a significant amount of adaptation and customization to the context of the present invention.

The same advantages are applicable to the second machine learning algorithm 200 illustrated in FIG. 4.

Although the present disclosure has been described hereinabove by way of non-restrictive, illustrative embodiments thereof, these embodiments may be modified at will within the scope of the appended claims without departing from the spirit and nature of the present disclosure.

## Claims

1. A computer-implemented method (400) using machine learning for performing digital content approval, the method (400) comprising the following steps:
storing (410) in a memory (320) of a computing device (300) a model (205) of a machine learning algorithm (200);
determining (420) metadata (20) related to at least one image (10); and
executing (430) by a processing unit (310) of the computing device (300) the machine learning algorithm (200), the machine learning algorithm (200) using the model (205) for determining a content approval indicator (40) based on inputs, the content approval indicator (40) indicating whether a content of the at least one image (10) is approved, the inputs comprising the metadata (20) and at least one of the following: data (30) related to a time of display of the at least one image (10), data (30) related to a location of display of the at least one image (10), and data (30) related to a screen used for displaying the at least one image (10).

2. The method of claim 1, wherein the at least one image (10) comprises a digital signage content.

3. The method of claim 1, wherein the at least one image (10) is part of a video.

4. The method of claim 1, wherein the metadata (20) comprise textual metadata.

5. The method of claim 4, wherein the textual metadata (20) comprise at least one of the following: a word or a group of words represented in the at least one image (10), a logo represented in the at least one image (10), a color used in the at least one image (10), and a type of content represented in the at least one image (10).

6. The method of claim 4, wherein the model (205) is a Natural Language Processing (NLP) model and the machine learning algorithm (200) is a NLP algorithm.

7. The method of claim 6, wherein the model (205) is a Large Language Model (LLM) and the machine learning algorithm (200) is a LLM algorithm.

8. The method of claim 1, wherein the determination of the metadata (20) comprises a processing of the at least one image (10) with another machine learning algorithm (100).

9. The method of claim 8, wherein the other machine learning algorithm (100) implements a neural network.

10. The method of claim 1, further comprising the step (530) of executing by the processing unit (310) of the computing device (300) the machine learning algorithm (200) with another model, the machine learning algorithm (200) using the other model for determining a content category (50) based on inputs, the content category (50) identifying a category of the content of the at least one image (10), the inputs comprising at least some (20') of the metadata (20).

11. A computing device (300) comprising a processing unit (310) adapted to perform the method (400) of any of claims 1 to 10.

12. A computer-readable storage medium comprising instructions which, when executed by a processing unit (310) of a computing device (300), cause the computing device (300) to carry out the method (400) of any of claims 1 to 10.

13. A computer program product that - when loaded into a memory of a computer and being executed by at least one processor of the computer - causes the computer to perform the steps of the computer-implemented method according to any of claims 1 to 10.
